# EUROPEAN PATENT APPLICATION

(11) **EP 1 890 072 A2**
(43) Date of publication of application: **20.02.2008**
(21) Application number: 07111125.6
(22) Date of filing: 27.06.2007
(51) Int. Cl.: F16M 11/00, F16M 13/02

(54) **Apparatus for supporting display device**

(30) Priority: 14.08.2006 KR 20060076822
(71) Applicant: Samsung Electronics Co., Ltd., Suwon-si Gyeonggi-do (KR)
(72) Inventor: Kim, Bong Joo, Yeongtong-gu, Suwon-si Gyeonggi-do (KR); Kim, Sang Hak, Paldal-gu, Suwon-si Gyeonggi-do (KR); Park, Jae Hoo, Paldal-gu, Suwon-si Gyeonggi-do (KR)
(74) Representative: D'Halleweyn, Nele Veerle Trees Gertrudis

(57) **Abstract**

An apparatus for supporting a display device (1) having: a fixing member (10), which is fixed to a wall; an upper supporting unit (20), which is coupled to the fixing member (10) to support the display device (1) and a cable accommodating unit (40), which is provided at the fixing member (10) to accommodate electric cables connected to the display device (1).

## Description

### BACKGROUND OF THE INVENTION

### 1. Field of the Invention

The present invention relates to an apparatus for supporting a display device, and more particularly to an apparatus for supporting a large scale display device, such as a projection TV, to mount the same to a wall.

### 2. Description of the Related Art

A projection TV is a device that makes a picture by projecting a beam on a rear surface of a screen and acquires a large image size. Such a projection TV is larger and heavier than a panel type display device such as an LCD (Liquid Crystal Display) or a PDP (Plasma Display Panel). Thus, the projection TV is generally put on a box-shaped supporting stand (e.g., a TV table), which is installed on an indoor floor.

But because the standardized supporting stand should be used, a user has a limitation in changing the mounting position or mounting height of the TV as he/she wishes. Also, because the supporting stand occupies the indoor space, space utilization is decreased, and it is difficult for a user to change an angle of the TV screen. Also, because of the standardized supporting stand, there is a spatial limitation in installing peripheral devices related to the TV, such as a video player, a camcorder, a set-top box, or a speaker system.

A conventional supporting apparatus for mounting the display device to a wall is disclosed in Korean Patent Laid-open Publication No. 10-2005-73654. The disclosed conventional supporting apparatus capable of mounting the display device to a wall is advantageous in the indoor space utilization. But because the conventional supporting apparatus can support only the panel type display device like the LCD or the PDP, it is not adequate in a structure or stability for supporting a large scale display device like a projection TV. Further, the conventional supporting apparatus is not suitable for installing peripheral devices, like a video player or a camcorder, together with a projection TV.

### BRIEF SUMMARY

The present invention has been made to solve the above and/or other problems. It is an aspect of the invention to provide an apparatus for supporting a display device, which can mount a display device to a wall and stably support the same.

It is another aspect of the invention to provide an apparatus for supporting a display device, which also can support peripheral devices related to a display device.

It is yet another aspect of the invention to provide an apparatus for supporting a display device, which can shield electric cables connected to a display device.

It is yet another aspect of the invention to provide an apparatus for supporting a display device, which can easily change an angle of a screen of a display device.

The foregoing and/or other aspects and advantages of the present invention are achieved by providing an apparatus for supporting a display device, including: a fixing member, which is fixed to a wall; an upper supporting unit, which is coupled to the fixing member to support the display device; and a cable accommodating unit, which is provided at the fixing member to accommodate electric cables connected to the display device.

According to one aspect, the upper supporting unit includes a supporting frame, which is fixed to the fixing member, and an upper supporting plate, which is coupled to the supporting frame.

According to one aspect, the fixing member is formed in a plate shape, the fixing member having a vertical length larger than a transverse width, the supporting frame includes a first supporting frame and a second supporting frame, which are respectively mounted approximately equidistantly from opposing lateral sides of the fixing member; and the first supporting frame and the second supporting frame each include a fixing portion, which is fixed to the fixing member and extends in a vertical direction, and a supporting portion, which extends forward from an upper end of the fixing portion to support a lower surface of the upper supporting plate.

According to one aspect, the apparatus further includes a door, which is hingedly coupled to the fixing member to open and close the cable accommodating unit.

According to one aspect, the apparatus further includes a lower supporting unit, which is provided at a lower portion of the fixing member to support a peripheral device of the display device.

According to one aspect, the lower supporting unit includes a lower supporting plate which is coupled to the fixing member, and an expanded plate, which is coupled to the lower supporting plate to enlarge a supporting area.

According to one aspect, the upper supporting unit includes: a supporting member, which is coupled to a lower surface of the display device at least one horizontal-articulated link device, a first end of which is horizontally pivotably coupled to the fixing member, and a second end of which is coupled with the supporting member; and a connecting device, which vertically rotatably connects the supporting member with the link device.

According to one aspect, the link device includes a first link device and a second link device, which respectively connect the fixing member and opposing ends of the connecting device.

According to one aspect, the first link device and the second link device and the second link device each include a first link a first end of which is horizontally pivotably coupled to the fixing member, and a second link a first end of which is horizontally pivotably coupled to a second end of the first link and a second end of which is horizontally pivotably coupled to one of the opposing ends of the connecting device.

According to one aspect, the connecting device includes: a connecting member, opposing ends of which are horizontally pivotably coupled to the second links of the first and second link devices; and connecting shafts, which vertically rotatably connect the supporting member to the connecting member.

The foregoing and/or other aspects and advantages of the present invention are achieved by providing an apparatus for supporting a display device including: a fixing member which is fixed to a wall; an upper supporting unit, which is provided at the fixing member to support the display device; and a lower supporting unit, which is provided at a lower portion of the fixing member to support a peripheral device of the display device.

The foregoing and/or other aspects and advantages of the present invention are achieved by providing an apparatus for supporting a display device including: a fixing member, which is fixed to a wall; a supporting member, which is coupled to the display device; at least one horizontal-articulated link device, a first end of which is horizontally pivotably coupled to the fixing member and a second end of which is coupled with the supporting member; and a connecting device which vertically rotatably connects the supporting member with the link device.

Additional and/or other aspects and advantages of the present invention will be set forth in part in the description that follows and, in part, will be apparent from the description, or may be learned by practice of the invention.

### BRIEF DESCRIPTION OF THE DRAWINGS

The above and/or other aspects and advantages of the present invention will become apparent and more readily appreciated from the following detailed description of the embodiments, taken in conjunction with the accompanying drawings, of which:
FIG. 1 is a front view showing an apparatus for supporting a display device in accordance with a first embodiment of the present invention;
FIG. 2 is a side view showing the apparatus of FIG. 1;
FIG. 3 is a perspective view showing the apparatus of FIG. 1;
FIG. 4 is a sectional view showing the apparatus of FIG. 1;
FIG. 5 is a perspective view showing an apparatus for supporting a display device in accordance with a second embodiment of the present invention;
FIG. 6 is a plan view showing a rotated state in a left direction of the apparatus of FIG. 5;
FIG. 7 is a plan view showing a rotated state in a right direction of the apparatus of FIG. 5; and
FIG. 8 is a side view showing the apparatus of FIG. 5.

### DETAILED DESCRIPTION

Reference will now be made in detail to embodiments of the present invention, examples of which are illustrated in the accompanying drawings, wherein like reference numerals refer to like elements throughout. The embodiments are described below to explain the present invention by referring to the figures.

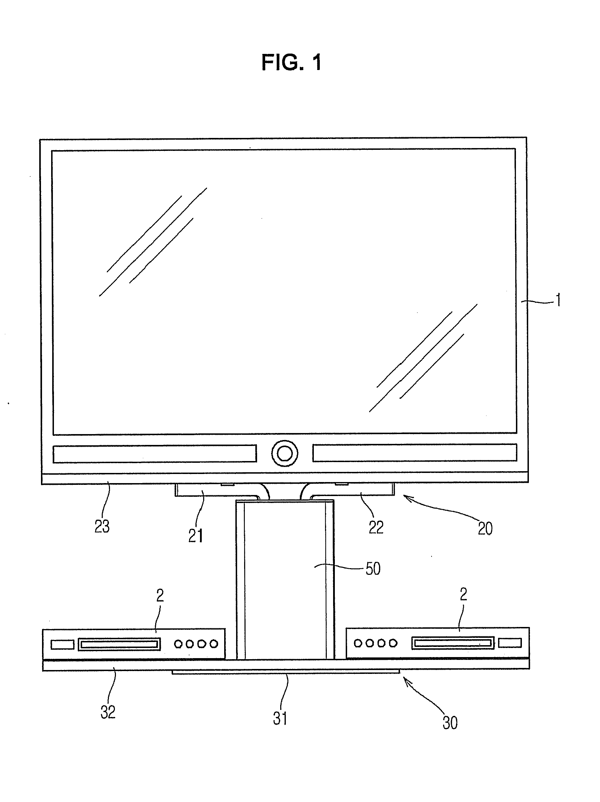

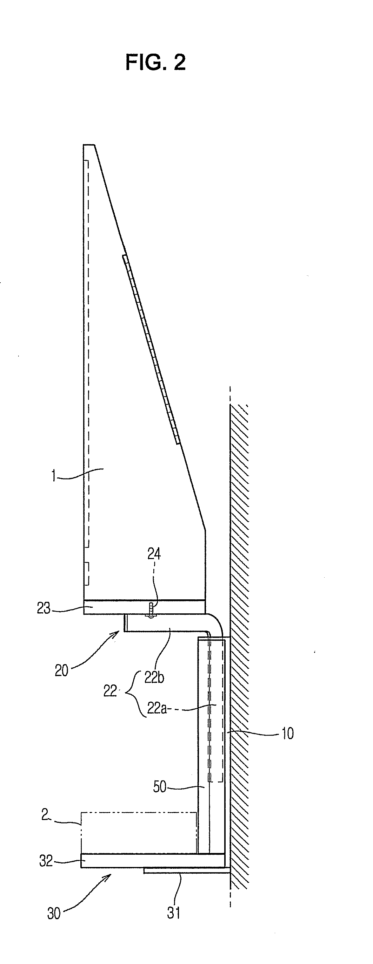

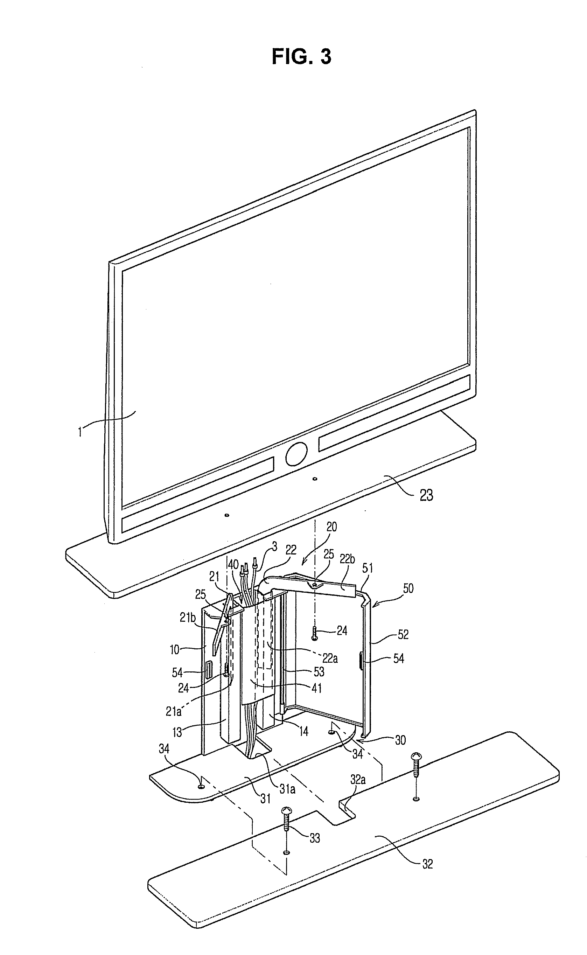

FIGS. 1 to 4 show an apparatus for supporting a display device in accordance with a first embodiment of the present invention. As shown in FIGS. 2 and 3, a supporting apparatus has a fixing member 10 that is fixed to an indoor wall, an upper supporting unit 20 which is coupled to an upper portion of the fixing member 10 to support a display device 1, and a lower supporting unit 30 that supports peripheral devices 2 related to the display device 1. The supporting apparatus further comprises a cable accommodating unit 40 that accommodates electric cables 3 connected to the display device 1.

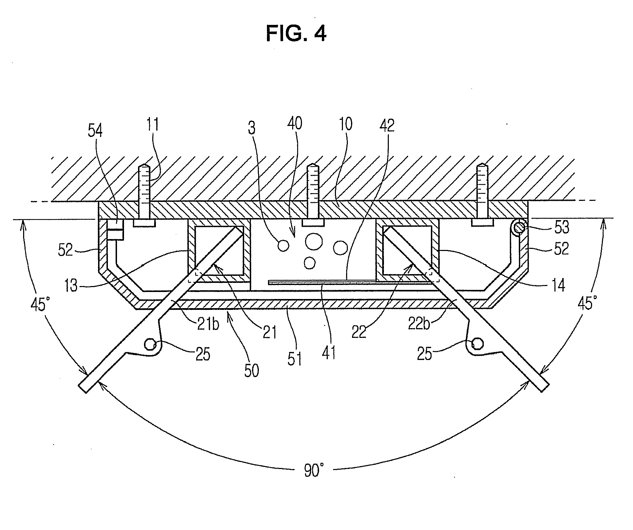

As shown in FIGS. 3 and 4, according to one embodiment, the fixing member 10 is made of steel, and is formed in a lengthwise rectangular plate shape (i.e. a vertical length is larger than a transverse width). The fixing member 10 is securely fixed to the wall by tightening fixing bolts 11.

The upper supporting unit 20 includes first and second supporting frames 21 and 22, which are fixed near opposing lateral sides of the fixing member 10. In other words, the first and second supporting frames 21 and 22 are respectively fixed approximately equidistantly from opposing lateral sides of fixing member 10. The upper supporting unit 20 also includes an upper supporting plate 23, which is coupled to the first and second supporting frames 21 and 22. The first and second supporting frames 21 and 22 include fixing portions 21 a and 22a which are fixed to the fixing member 10 and extend in a vertical direction, and supporting portions 21 b and 22b which are bent from upper ends of the fixing portions 21 a and 22a and extend forward to support the upper supporting plate 23. In other words, the supporting portions 21 b are cantilevered arms extending away from a top of the fixing member 10.

To securely couple the first and second supporting frames 21 and 22 with the fixing member 10, first and second lengthwise reinforcing members 13 and 14, which have a hollow rectangle-shaped cross-section, are mounted to a front surface of the fixing member 10 in parallel with each other with a distance therebetween. The first and second reinforcing members 13 and 14 extend in a vertical direction, and are fixed to the front surface of the fixing member 10 by welding. As shown in FIGS. 2 and 3, the fixing portions 21 a and 22a of the first and second supporting frames 21 and 22 are inserted into the first and second reinforcing members 13 and 14 through upper ends thereof, and are fixed by welding. This constitution enables the first and second supporting frames 21 and 22 to support a larger load and reinforces a rigidity of the fixing member 10.

As shown in FIGS. 3 and 4, the supporting portions 21 b and 22b of the first and second supporting frames 21 and 22 extend such that an angle with respect to a front surface of the fixing member 10 is about 45 degrees and an inside angle between the supporting portions 21 b and 22b is about 90 degrees, to stably support a lower surface of the upper supporting plate 23. The supporting portions 21 b and 22b are formed with bolt holes 25 through which fixing bolts 24 are tightened to fix the upper supporting plate 23 to the first and second supporting frames 21 and 22.

As shown in FIGS. 2 and 3, the lower supporting unit 30 includes a lower supporting plate 31 that is coupled to a lower portion of the fixing member 10, and an expanded plate 32 that is coupled on the lower supporting plate 31 to enlarge a supporting area. The lower supporting plate 31 is coupled to the fixing member 10 such that an angle between an upper surface of the lower supporting plate 31 and the front surface of the fixing member 10 is about 90 degrees. According to one embodiment, he lower supporting plate 31 is fixed to the fixing member 10 by welding. According to another embodiment, the lower supporting plate 31 is formed integrally with the fixing member 10. The lower supporting plate 31 is formed with bolt holes 34 through which fixing bolts 33 are tightened to fix the expanded plate 32 to the lower supporting plate 31. As shown in FIG. 1, the peripheral devices 2 related to the display device 1, such as a video player, a camcorder, a set-top box, a speaker system, or the like, are put on the expanded plate 32.

As described above, because the upper supporting unit 20 and the lower supporting unit 30 are securely coupled to the fixing member 10 and the fixing member 10 is securely fixed to the wall, the large scale display device 1, like a projection TV, can be loaded on the upper supporting unit 20, and the peripheral devices 2 can be loaded on the lower supporting unit 30. Accordingly, the supporting apparatus can increase the indoor space utilization in comparison with the conventional box-shaped supporting table. Although it is depicted in FIG. 2 that the projection TV is loaded on the upper supporting unit 20, it is not restricted thereto. In other words, a PDP TV or an LCD TV can be loaded on the upper supporting unit 20.

As shown in FIGS. 3 and 4, the cable accommodating unit 40 includes a space that is defined between the first reinforcing member 13 and the second reinforcing member 14, which are fixed to the front surface of the fixing member 10. The lower supporting plate 31 and the expanded plate 32 are formed with openings 31 a and 32a through which the electric cables 3 can pass toward the space of the cable accommodating unit 40. The cable accommodating unit 40 further includes a flexible cover 41 to support the electric cables 3. One side of the cover 41 is fixed to either the first reinforcing member 13 or the second reinforcing member 14. According to one embodiment, to prevent movement or separation of the electric cables 3, a double sided adhesive tape 42 is adhered to an inner surface of the cover 41.

The cable accommodating unit 40 can safely protect the electric cables 3 which are connected to the display device 1 and/or the peripheral devices 2.

A cover 50 is hingedly coupled to the fixing member 10 to open and close the cable accommodating unit 40. The door 50 includes a front panel 51 and side panels 52, which are bent rearward from both sides of the front panel 51. According to one embodiment, the front panel 51 of the door 50 has a size that is almost the same as that the of the front surface of the fixing member 10, to cover the cable accommodating unit 40 and the first and second reinforcing members 13 and 14. One of the side panels 52 of the door 50 is hingedly coupled to the fixing member 10 by a hinge shaft 53. The other side panel 52, opposite to the hinge shaft 53, is provided with door closing unit 54, e.g., a magnet, to selectively keep the door 50 in a closed state. Accordingly, when the door 50 is closed, the cable accommodating unit 40, the first and second reinforcing members 13 and 14, and the fixing members 10 are shielded by the door 50, thereby providing an aesthetic appearance.

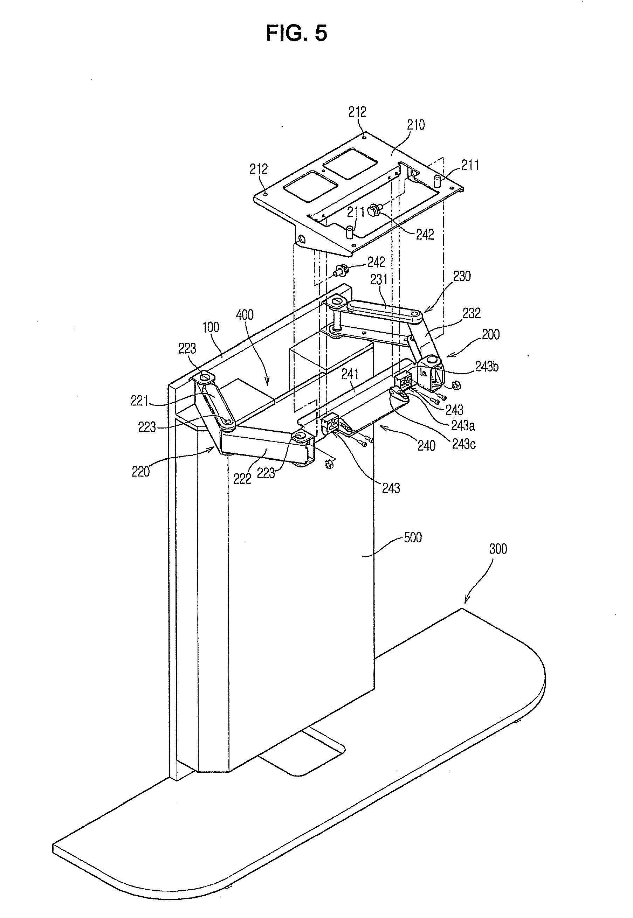

FIGS. 5 to 8 show an apparatus for supporting the display device in accordance with a second embodiment of the present invention. As shown in FIG. 5, the supporting apparatus of this embodiment has an upper supporting unit 200 that enables the user to freely change an angle of a screen of the display device 1 in a user-desired direction. A fixing member 100, a lower supporting unit 300, a cable accommodating unit 400, and a door 500 of the supporting apparatus of this embodiment are respectively the same as the same-named components of the supporting apparatus of the previously-described embodiment. Therefore, the upper supporting unit 200 will be primarily described.

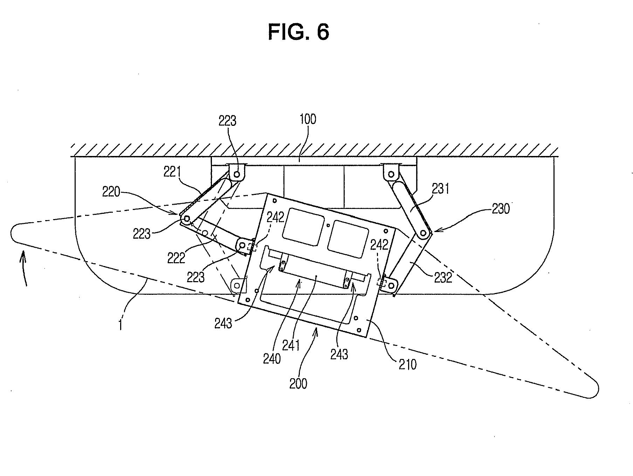

As shown in FIGS. 5 and 6, the upper supporting unit 200 includes: a plate-shaped supporting member 210 that is coupled to a lower surface of the display device 1, a first link device 220 and a second link device 230 that are respectively mounted near opposing lateral sides of the fixing member 100, to connect the supporting member 210 with the fixing member 100, and a connecting device 240, which connects the supporting member 210 with the first and second link devices 220 and 230. Thus, the first link device 220 and the second link device are cantilevered arms extending away from a top of fixing member 100.

The first link device 220 includes a first link 221 and a second link 222, which pivotably connect a left-upper portion of the fixing member 100 and a left end portion of the connecting device 240. A first end of the first link 221 is horizontally pivotably connected to the left-upper portion of the fixing member 100.

A first end of the second link 222 is horizontally pivotably connected to a second end of the first link 221, and a second end of the second link 222 is horizontally pivotably connected to the left end portion of the connecting device 240.

Connecting portions of the fixing member 100, the first link 221, the second link 222 and the connecting device 240 are pivotably connected to each other by pivot pins 223.

In the same manner as the first link device 220, the second link device 230 includes a first link 231 and a second link 232 which pivotably connect a right-upper portion of the fixing member 100 and a right end portion of the connecting device 240.

The connecting device 240 includes: a connecting member 241, opposing ends of which are horizontally pivotably connected to the second links 222 and 232 of the first and second link devices 220 and 230; and connecting shafts 242, which vertically rotatably connect opposing lateral sides of the supporting member 210 to the opposing ends of the connecting member 241. Damping devices 243 are mounted between the connecting member 241 and the supporting member 210. The damping devices 243 generate a resistance against the arbitrary rotation of the supporting member 210, to keep the stationary state thereof after adjusting the angle of the screen by vertically rotating the supporting member 210. As shown in FIG. 5, each of the damping devices 243 includes a first damping member 243a that is fixed to the connecting member 241, a second damping member 243b which is fixed to the supporting member 210, and a connecting shaft 243c that rotatably connects the first damping member 243a and the second damping member 243b. Accordingly, the second damping member 243b can vertically rotate with respect to the first damping member 243a.

The supporting member 210, as shown in FIG. 5, is formed with multiple fixing protrusions 211 that are fittedly fixed to the lower surface of the display device 1, and multiple bolt holes 212. By inserting the fixing protrusions 211 of the supporting member 210 into fixing holes (not shown) formed at the lower surface of the display device 1 and tightening fixing bolts (not shown) into the lower surface of the display device 1 through the bolt holes of the supporting member 210, the display device 1 can be securely fixed to the supporting member 210.

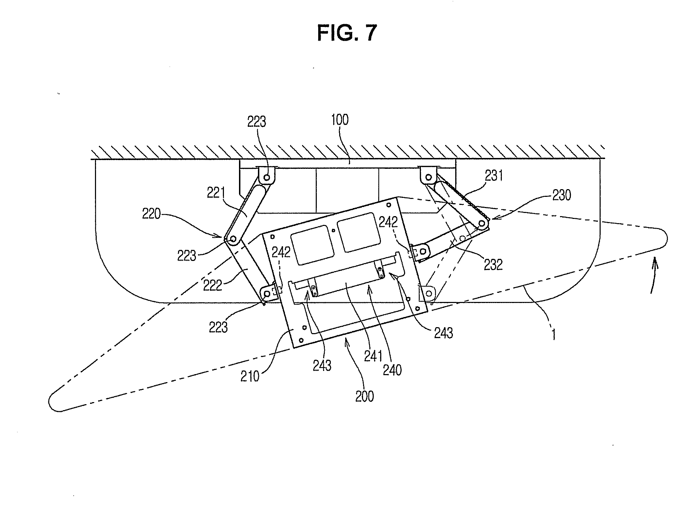

Because the horizontal-articulated first link device 220 and the horizontal-articulated second link device 230 can horizontally pivot with respect to the fixing member 100 and the connecting device 240, the upper supporting unit 200 can rotate the display device 1 so that the screen of the display device 1 faces toward a left side (see FIG. 6) or toward a right side (see FIG. 7).

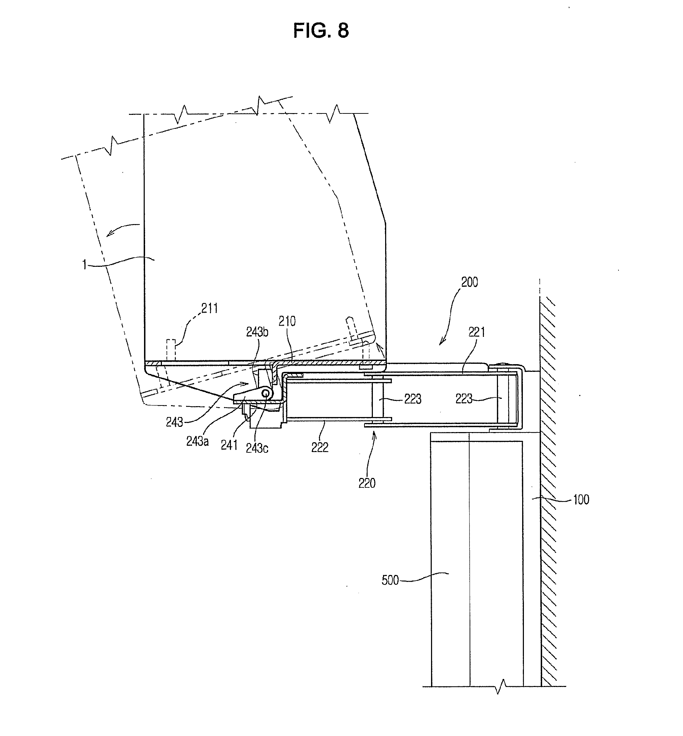

Also, as shown in FIG. 8, because the supporting member 210 coupled to the lower surface of the display device 1 can vertically rotate with respect to the connecting member 241, an angle of the screen of the display device 1 can also be adjusted in a vertical direction.

Although it is depicted in FIG. 8 that the supporting member 210 is coupled to the lower surface of the display device 1, it is not restricted thereto. The supporting member 210 may be coupled to a rear surface of the display device 1. Of course, the upper supporting unit 200 structured such that the supporting member 210 is coupled to the rear surface of the display device can also support the panel type display device such as the PDP or the LCD.

As is apparent from the above description, the apparatus for supporting the display device according to embodiments of the present invention can more stably support the display device because the display device can be installed on the upper supporting unit with the fixing member being fixed to the wall. And, since the supporting apparatus is installed to the wall, the indoor space utilization can be increased.

Also, since the supporting apparatus is provided with the lower supporting unit, which is coupled to the fixing member, the peripheral devices related to the display device can also be supported by the supporting apparatus.

Also, since the supporting apparatus is provided with the cable accommodating unit, the electric cables connected to the display device can be safely protected, and can be shielded, thereby increasing indoor aesthetics.

Further, according to one embodiment, since the link devices of the upper supporting unit can horizontally pivot and the supporting member supporting the lower surface of the display device can vertically rotate with respect to the link devices, the angle of the screen of the display device can be freely adjusted in horizontal and vertical directions.

Although embodiments of the present invention have been shown and described, the present invention is not limited to the described embodiments. Instead, it would be appreciated by those skilled in the art that changes may be made to these embodiment without departing from the principles and spirit of the invention, the scope of which is defined by the claims and their equivalents.

## Claims

1. An apparatus for supporting a display device, comprising:
a fixing member, which is fixed to a wall;
an upper supporting unit, which is coupled to the fixing member to support the display device; and
a cable accommodating unit, which, is provided at the fixing member to accommodate electric cables connected to the display device.

2. The apparatus according to claim 1, wherein the upper supporting unit comprises:
a supporting frame which is fixed to the fixing member; and
an upper supporting plate, which is coupled to the supporting frame.

3. The apparatus according to claim 2, wherein:
the fixing member is formed in a plate shape, the fixing member having a vertical length larger than a transverse width;
the supporting frame includes a first supporting frame and a second supporting frame, which are respectively mounted approximately equidistantly from opposing lateral sides of the fixing member; and
the first supporting frame and the second supporting frame each include a fixing portion, which is fixed to the fixing member and extends in a vertical direction, and a supporting portion, which extends forward from an upper end of the fixing portion to support a lower surface of the upper supporting plate.

4. The apparatus according to claim 1, further comprising:
a door, which is hingedly coupled to the fixing member to open and close the cable accommodating unit.

5. The apparatus according to claim 1, further comprising:
a lower supporting unit which is provided at a lower portion of the fixing member to support a peripheral device of the display device.

6. The apparatus according to claim 5, wherein the lower supporting unit comprises:
a lower supporting plate which is coupled to the fixing member, and
an expanded plate, which is coupled to the lower supporting plate to enlarge a supporting area.

7. The apparatus according to claim 1, wherein the upper supporting unit comprises:
a supporting member, which is coupled to a lower surface of the display device;
at least one horizontal-articulated link device, a first end of which is horizontally pivotably coupled with the fixing member and a second end of which is coupled with the supporting member; and
a connecting device, which vertically rotatably connects the supporting member to the link device.

8. The apparatus according to claim 7, wherein the link device comprises a first link device and a second link device, which respectively connect the fixing member and opposing ends of the connecting device.

9. The apparatus according to claim 8, wherein the first link device and the second link device each include a first link , a first end of which is horizontally pivotably coupled to the fixing member, and a second, link a first end of which is horizontally pivotably coupled to a second end of the first link and a second end of which is horizontally pivotably coupled to one of the opposing ends of the connecting device.

10. The apparatus according to claim 9, wherein the connecting device comprises:
a connecting member, opposing ends of which are horizontally pivotably coupled to the second links of the first and second link devices; and
connecting shafts which vertically rotatably connect the supporting member to the connecting member.

11. An apparatus for supporting a display device, comprising:
a fixing member, which is fixed to a wall;
an upper supporting unit, which is provided at the fixing member to support the display device; and
a lower supporting unit, which is provided at a lower portion of the fixing member to support a peripheral device of the display device.

12. The apparatus according to claim 11, wherein the upper supporting unit comprises:
a supporting frame, which is fixed to the fixing member, and
an upper supporting plate, which is coupled to the supporting frame.

13. The apparatus according to claim 12, wherein:
the fixing member is formed in a plate shape, the fixing member having a vertical length larger than a transverse width,
the supporting frame includes a first supporting frame and a second supporting frame, which are respectively mounted approximately equidistantly from opposing lateral sides of the fixing member; and
the first supporting frame and the second supporting frame each include a fixing portion which is fixed to the fixing member and extends in a vertical direction, and a supporting portion, which extends forward from an upper end of the fixing portion to support a lower surface of the upper supporting plate.

14. The apparatus according to claim 11, wherein the lower supporting unit comprises:
a lower supporting plate, which is coupled to the fixing member; and
an expanded plate which is coupled to the lower supporting plate to enlarge a supporting area.

15. The apparatus according to claim 11, wherein the upper supporting unit comprises:
a supporting member, which is coupled to a lower surface of the display device; at least one horizontal-articulated link device, a first end of which is horizontally pivotably coupled to the fixing member, and a second end of which is coupled with the supporting member; and
a connecting device, which vertically rotatably connects the supporting member with the link device.

16. The apparatus according to claim 15, wherein the link device comprises a first link device and a second link device, which respectively connect the fixing member and opposing ends of the connecting device.

17. The apparatus according to claim 16, wherein the first link device and the second link device each include a first link, a first end of which is horizontally pivotably coupled to the fixing member, and a second link , a first end of which is horizontally pivotably coupled to a second end of the first link and a second end of which is horizontally pivotably coupled to one of the opposing ends of the connecting device.

18. The apparatus according to claim 17, wherein the connecting device comprises:
a connecting member, opposing ends of which are horizontally pivotably coupled to the second links of the first and second link devices; and
connecting shafts, which vertically rotatably connect the supporting member to the connecting member.

19. An apparatus for supporting a display device, comprising:
a fixing member, which is fixed to a wall;
a supporting member which, is coupled to the display device;
at least one horizontal-articulated link device, a first end of which is horizontally pivotably coupled to the fixing member and a second end of which is coupled with the supporting member; and
a connecting device, which vertically rotatably connects the supporting member with the link device.

20. The apparatus according to claim 19, wherein the link device comprises a first link device and a second link device, which respectively connect the fixing member and both opposing of the connecting device.

21. The apparatus according to claim 20, wherein the first link device and the second link device each include a first link, a first end of which is horizontally pivotably coupled to the fixing member, and a second link, a first end of which is horizontally pivotably coupled to a second end of the first link and a second end of which is horizontally pivotably coupled to one of the opposing ends of the connecting device.

22. The apparatus according to claim 21, wherein the connecting device comprises:
a connecting member, opposing ends of which are horizontally pivotably coupled to the second links of the first and second link devices; and
connecting shafts, which vertically rotatably connect the supporting member to the connecting member.

23. An apparatus for supporting a display device, comprising:
a fixing member that is fixable to a wall;
a lower supporting unit extending from a bottom front portion of the fixing member to provide a horizontal storage surface;
a cable accommodating unit extending vertically along the fixing member to accommodate electric cables connected to the display device; and
an upper supporting unit supporting the display device, the upper supporting unit including a pair of cantilevered arms extending away from a top front of the fixing member.

24. The apparatus according to claim 23, wherein the apparatus further comprises:
a pair of lengthwise reinforcing members mounted to the front of the fixing member approximately parallel to one another; and
the upper supporting unit comprises
a pair of supporting frames, each supporting frame comprising
a fixing portion fixed in one of the lengthwise reinforcing members, and
a supporting portion, bent from an upper end of the fixing portion and extending away from the top of the fixing member to form one of the cantilevered arms, and
an upper supporting plate, coupled to the pair of supporting portions, and supporting the display device.

25. The apparatus according to claim 23, wherein the upper supporting unit comprises:
first and second link devices extending away from the top front of the fixing member to form the cantilevered arms, each of the first and second link devices comprising
a first link, a first end of which is horizontally pivotably coupled to the top front of fixing member, and
a second link, a first end of which is horizontally pivotably coupled to a second end of the first link;
a connecting device comprising
a connecting member horizontally pivotably coupled at opposing ends thereof to respective second ends of second links of the first and second link devices, and
connecting shafts; and
a supporting member coupled to the display device, and vertically rotatably connected to the connecting member via the connecting shafts.

26. The apparatus according to claim 25, wherein the connecting device further comprises:
a pair of damping devices mounted between the connecting member and the supporting member, to prevent arbitrary rotation of the supporting member with respect to the connecting member.
